Europäisches Patentamt

European Patent Office

Office européen des brevets

(11) Publication number: **0 159 850**
A2

# (12) EUROPEAN PATENT APPLICATION

(21) Application number: 85302450.3

(22) Date of filing: 04.04.85

(51) Int. Cl.⁴: **G 02 B 5/30**

(30) Priority: 07.04.84 JP 68400/84

(43) Date of publication of application: 30.10.85
Bulletin 85/44

(84) Designated Contracting States: **AT BE CH DE FR GB IT
LI LU NL SE**

(71) Applicant: **Saiteku Kabushiki Kaisha, 7-5, Minami
Aoyama 6-chome Minato-ku, Tokyo (JP)**

(72) Inventor: **Takahashi, Yasunori, 5-20, Todoroki 2-chome
Setagaya-ku, Tokyo (JP)**

(74) Representative: **Luckhurst, Anthony Henry William et al,
STANLEY, POPPLEWELL, POOLE 57 Lincoln's Inn
Fields, London WC2A 3LS (GB)**

(54) **Process for making polarizer.**

(57) A process for making a polarizer such as a polarizing plate or a polarizing film comprises the step of applying at least one of a magnetic field or an electric field to a coated layer 16 containing a dichromatic material therein which is formed on a substrate 14, thereby to effect molecular or crystalline orientation of the dichromatic material in a predetermined direction. The coated substrate 14 is passed through the magnetic or electric field, or the magnetic poles 10a, 10b or electrodes 26a, 26b, may be moved across the coated substrate. The coating may be dried and a second coating applied and oriented in a like way, with a direction of orientation at an angle to that of the first direction, to form a circular polarizer. The substrate may be of glass or plastics. The process avoids the drawbacks inherent in the prior art process of applying a stress to the substrate.

0159850

-1-

# PROCESS FOR MAKING POLARIZER

This invention relates to a process for making a polarizer such as a polarizing plate or a polarizing film, and more particularly to a process for making a polarizer such as a polarizing plate or polarizing film which is adapted to control light.

Conventionally, a polarizer such as a polarizing plate or a polarizing film has been typically prepared by subjecting a transparent film formed of a polymer material to a uniaxial orientation treatment to cause molecules of the film to be orientated in a predetermined direction, so that a dichromatic material applied to or coated on the surface of the film may be orientated and adsorbed at an intermicellar region or gap formed on the film.

However, such a conventional process as described above has a disadvantage that a material for a substrate is limited to a specific plastic film material suitable for an orientation treatment, for example, such as polyvinyl alcohol (hereinafter referred to as "PVA"), resulting in the selection of a material of satisfied light transmittance being substantially restricted.

Another disadvantage encountered with the conventional process is that it is substantially impossible to readily carry out the process because the control of a temperature during the orientation treatment, the quality control of a material for the substrate, and the adjustment and control of orientation tension must be strictly carried out; and it is not suitable for continuous and rapid mass production of the film since the film must be intermittently made every fixed area thereof.

A further problem of the conventional process is that although iodine is typically used as a material suitable for orientation at the intermicellar region or gap of the film, it unfortunately requires a protective film because of being apt to be adversely affected by an environment of high temperature, high moisture and the like; and iodine causes applications of the film to be limited because the maximum value of light transmittance is at most about 50% based on its theoretical value.

The conventional process could conceivably use Ag, Au, Hg, Fe or the like as a polarizing agent, however, such material is not suitable for practical use because it is highly decreased in polarizability due to substantial deterioration of the orientation at the intermicellar gap or region.

It is therefore desirable a process for the production of a polarizer be developed which is capable of using a wide variety of materials for the substrate and various kinds of polarizing materials, carrying out the mass production of the polarizer at a low cost and in a high yield, and accomplishing the uniform orientation of a polarizing material.

Throughout the specification and claims, the term "polarizer" is used to indicate a polarizing plate and/or a polarizing film.

The present invention has been made in view of the foregoing disadvantages of the prior art.

Accordingly, it is an object of the present invention to provide a process for making a polarizer such as a polarizing plate or a polarizing film which is capable of orientating a dichromatic polarizing material applied to or coated on a substrate without applying any mechanical stress to the substrate, so that substantially all transparent plastic and glass materials of a film-like shape, a plate-like shape and the like such as PVA may be extensively used for the substrate.

It is another object of the present invention to provide a process for making a polarizer such as a polarizing plate or a polarizing film which is capable of practically using a metallic material as well as a non-metallic material as a dichromatic polarizing material.

It is another object of the present invention to provide a process for making a polarizer such as a polarizing plate or a polarizing film which is capable of carrying out the mass production of the polarizer using a continuous substrate material according to a continuous production method.

It is a further object of the present invention to provide a process for making a polarizer such as a polarizing plate or a polarizing film which is capable of manufacturing the polarizer at a low cost and in a high yield.

It is still a further object of the present invention to provide a process for making a polarizer such as a polarizing plate or a polarizing film which is capable of accomplishing the precise and uniform orientation of a polarizing material to provide the polarizer with excellent polarizability.

In accordance with the present invention, there is provided a process for making a polarizer such as a polarizing plate or a polarizing film comprising the step of applying at least one of a magnetic field and an electric field to a coated layer containing a dichromatic material therein which is formed on a substrate to carry out the molecular orientation or crystalline orientation of said dichromatic material contained in said coated layer in a predetermined direction.

In a preferred embodiment of the present invention, the substrate is formed of a transparent plastic material.

0159850

-4-

In a preferred embodiment of the present invention, the substrate is formed of a transparent glass material.

In a preferred embodiment of the present invention, the dichromatic material is a crystalline metallic material.

In a preferred embodiment of the present invention, the dichromatic material is a crystalline non-metallic material.

In accordance with the present invention, there is also provided a process for making a polarizer such as a polarizing plate or a polarizing film comprising the step of applying a magnetic field to a coated layer containing a dichromatic material therein which is formed on a substrate to carry out the molecular orientation or crystalline orientation of said dichromatic material contained in said coated layer in a predetermined direction.

Further, there is provided a process for making a polarizer such as a polarizing plate or a polarizing film comprising the step of applying an electric field to a coated layer containing a dichromatic material therein which is formed on a substrate to carry out the molecular orientation or crystalline orientation of said dichromatic material contained in said coated layer in a predetermined direction.

Furthermore, there is provided a process for making a polarizer such as a polarizing plate or a polarizing film comprising the steps of:

applying a magnetic field to a first coated layer containing a dichromatic material therein which is formed on a substrate to carry out the molecular orientation or crystalline orientation of said dichromatic material contained in said first coated layer in a predetermined direction;

applying a material essentially consisting of the same dichromatic material as said dichromatic material of said first coated layer onto said first coated layer to form a second coated layer after the orientating and drying of said first coated layer; and

applying to said second coated layer an electric field formed to cross said second coated layer at a predetermined angle to carry out the molecular orientation or crystalline orientation of said dichromatic material of said second coated layer in the direction different from the orientation direction of said first coated layer.

These and other objects and many of the attendant advantages of the present invention will be readily appreciated as the same becomes better understood by reference to the following description when considered in connection with the accompanying drawings in which like reference numerals designate the same parts throughout, wherein:

Fig. 1 is a schematic perspective sectional view showing a step of carrying out the orientation of a dichromatic material contained in a coated layer formed on a substrate by means of a magnetic field in a first embodiment of a process according to the present invention;

Fig. 2 is a diagrammatic view showing the manufacturing process of a polarizing plate or filter according to the first embodiment of the present invention;

Fig. 3 is a flow diagram showing the manufacturing process of a polarizing plate or film including two polarizing layers in a second embodiment of a process according to the present invention;

Fig. 4 is a schematic perspective sectional view showing a step of carrying out the orientation of a dichromatic material contained in a coated layer formed on a substrate by means of an electric field in the the second embodiment of the present invention;

Fig. 5 is a schematic plan view showing the orientation step of Fig. 4; and

Fig. 6 is a sectional view taken along line VI-VI of Fig. 5.

Now, a process for making a polarizer such as a polarizing plate or a polarizing film according to the present invention will be described hereinafter with reference to the accompanying drawings.

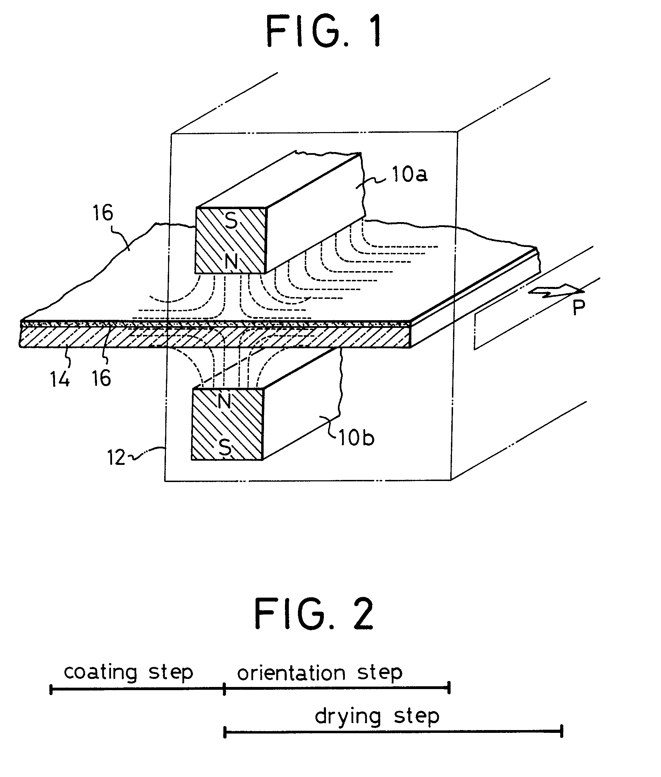

Figs. 1 and 2 illustrate a first embodiment of a process for making a polarizer according to the present invention. The first embodiment is adapted to carry out the orientation of a dichromatic material by means of a magnetic field.

In Fig. 1, reference numerals 10a and 10b designate a pair of magnets vertically arranged with a predetermined interval being defined therebetween. The magnets 10a and 10b are positioned in a drying chamber 12 in a manner such that the same magnetic poles of the magnets 10a and 10b are opposed to each other. Thus, the magnetic fluxes generated from the magnetic poles of the magnets opposite to each other repel each other, so that each magnetic flux may be divided into two fractions which substantially horizontally flow in the directions away from each other and in parallel with the corresponding ones of the other magnetic flux, as shown in Fig. 1. Reference numeral 14 indicates a substrate formed of a transparent glass plate which preferably has light transmittance as high as at least about 95%. The substrate 14 is formed on one surface thereof with a coated layer 16 essentially consisting of a dichromatic polarizing material. In the illustrated embodiment, an organic metallic compound, for example, such as liquid organic tin chloride obtained by the reaction of tin chloride with polymer may be used as the dichromatic polarizing material. In the process of the illustrated embodiment, as shown in Fig. 2, liquid-like tin chloride is first coated on the upper surface of the glass substrate 14 formed of glass and horizontally arranged to form the coated layer 16 and then the substrate 14 is horizontally moved in the direction indicated by an arrow P. This results in the magnetic fluxes of the magnets 10a and 10b parallel with each other being applied to the coated layer 16 of tin chloride. At that time, the coated layer 16 is already subjected to a drying atmosphere formed in the drying chamber 12 connected to a heating source (not shown), so that an organic component contained therein is gradually removed due to volatilization to form crystalline tin chloride or desalting occurs to causes the formation of molecular tin which possesses polarization characteristics and has a small amount of organic component carried thereon, and concurrently the magnetic fluxes are applied to tin molecules or tin chloride crystals formed in the coated layer to cause the molecular orientation of tin or crystalline orientation of tin chloride in the directions of the magnetic fluxes. Thereafter, the coated layer 16 is completely dried to fix the tin molecules or tin chloride crystals on the substrate 14 to complete a linear polarizing plate.

In the illustrated embodiment, any mechanical external force is not applied to the substrate 14, so that the substrate may have its light transmittance effectively kept at a satisfied level. Also, the embodiment allows a metal material or crystalline metallic material which has light transmittance of 80-90% or more based on its theoretical value to be used as the dichromatic polarizing material, thus, a linear polarizing plate of which light transmittance along the transmission axis is at least 75% or more and that along the absorption axis is 0.2% or less can be obtained. This clearly indicates that the polarizing plate obtained by the illustrated first embodiment has a substantially high quality as compared with the conventional one.

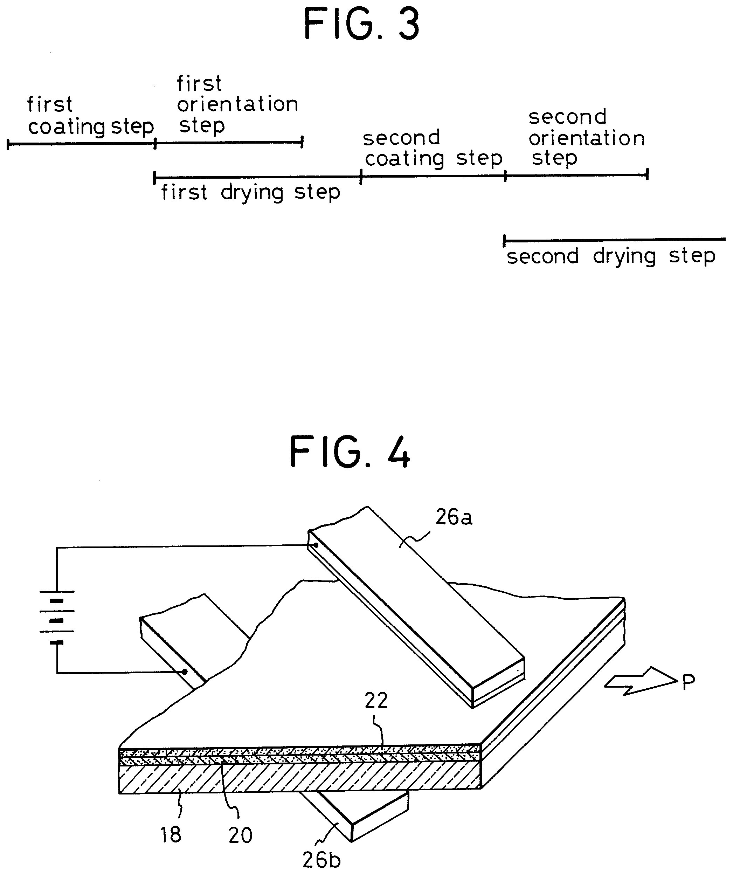

Figs. 3 to 6 illustrate a second embodiment of a process for making a polarizer according to the present invention, which is adapted to prepare a circular polarizing film.

In the second embodiment, a circular polarizing film is prepared by laminating, on a linear polarizing film obtained according to the first embodiment described above, a layer of which phase is different by 1/4 from that of the linear polarizing film.

More particularly, a first coating step is firstly carried out to apply a dichromatic material comprising potassium iodide solution onto a substrate 18 formed of a transparent PVA film to form a first coated layer 20 and then a first orientation step is carried out to apply a magnetic field to the so-formed first coated layer 20 in such a manner as shown in Fig. 1 to orientate the molecules or crystals of iodine in the first coated layer 20 in a predetermined direction. Then, the PVA substrate 18 is subjected to a drying treatment to fix the iodine molecules or potassium iodide crystals on the substrate 18 to prepare a linear polarizing film. Subsequently, a second coating step is carried out to further coat potassium iodide solution on the first coated layer 20 to form a second coated layer 22.

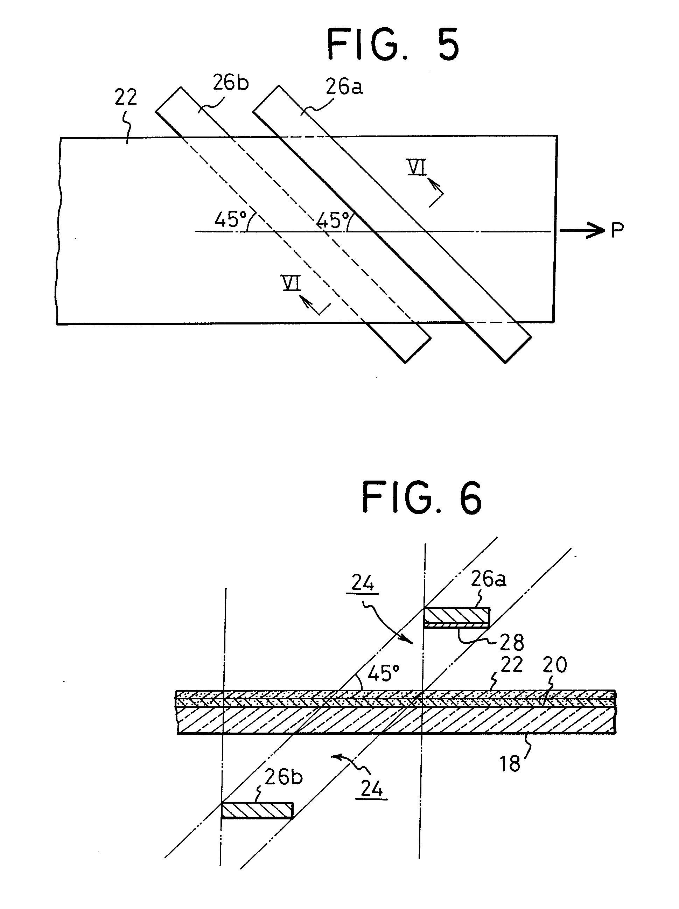

Thereafter, a second orientation step is carried out to apply an electric field 24 (Fig. 6) generated by the application of voltage of about 3000V between a positive plate electrode 26a and a negative plate electrode 26b to the second coated layer 22 formed on the first coated layer 20 while horizontally moving the substrate 18 in the direction indicated by an arrow P between the positive plate electrode 26a and the negative plate electrode 26b, as shown in Figs. 4 and 5. The plate electrodes 26a and 26b are arranged substantially horizontally and, as shown in Fig. 5 at an angle of about 45° with respect to the direction indicated by the arrow P or the moving direction of the substrate 18. Further, the plate electrodes 26a and 26b are disposed to cause the electric field 24 generated to be directed to cross the upper surface of the substrate at an angle of 45°, as shown in Fig. 6. This causes in the bi-polarized iodine molecules or potassium iodide crystals contained in the portion of the second coated layer 22 which has reached the region of the electric field 24 to be orientated in the direction of the electric field 24 or at an angle of 45° to the direction indicated by the arrow P and at an angle of 45° to the surface of the substrate 18.

This results in the second coated layer 22 forming a polarizing layer which has a polarizing axis of which phase is different by 1/4 from that of the polarizing axis of the first coated layer 20 orientated in the direction indicated by the arrow P.

In Fig. 6, reference numeral 28 designates a nesa film used for heating the second coated layer 22 in a second drying step following the second orientation step. The nesa film 28 is mounted on the lower surface of the positive plate electrode 26a so as to be opposite to the second coated layer 22 and connected to a suitable power supply (not shown). The drying of the second coated layer 22 due to the heating by the nesa film 28 causes the iodine molecules or potassium iodide crystals in the second coated layer 22 to be fixedly laminated on the first coated layer 20 in a state orientated in the direction of the electric field while being gradually tetragonally crystallized.

In the second embodiment, the coated layers each are prepared according to a vapor deposition method.

A circular polarizing film prepared according to the second embodiment is free of occurrence of a streak pattern due to micelle because no external force is applied to the PVA substrate 18. This allows the circular polarizing film to effectively keep light transmittance as near to the theoretical value as possible. Also, in the second embodiment, the orientation of the molecules or crystals in each of the coated layers 20 and 22 is carried out by the application of a magnetic field or an electric field to the layer, resulting in the so-obtained orientation being uniform sufficiently to provide the circular polarizing film with excellent circular polarizing characteristics.

In the embodiments described above, the liquid tin chloride and potassium iodide are used as the dichromatic material, however, the dichromatic material suitable for us in the present invention is not limited to such materials. In the present invention, salts of nonmetals, for example, such as Se, As, Te and the like and those of metals, for example, such as Ti, Va, Cr, Mn, Fe, Co, Y, Nb, Mo, Zn, Ag, Cd, In, Sb, Au and the like may be also effectively used as the dichromatic material.

In particular, crystalline metallic salts of In, Sn and Sb and crystalline nonmetallic salts of As, Se, Te and I may be more conveniently used as the dichromatic material in the present invention, because the salts exhibit high light absorptive power and excellent dichroism over a wide range of wavelength.

The formation of each of the coated layers in the present invention may be carried out according to any suitable method widely known in the art, for example, such as gravure coating, knife coating, slit coating, reverse-roll coating or the like.

In the present invention, the intensity of a magnetic field is adjusted depending upon a polarizing material used. The magnetic field applied is preferably between about 1500 gauss and about 3000 gauss and about three times as large as the resistance to magnetism of the material. The intensity of an electric field is desirably determined within a range between about 1000V and 10000V depending upon a polarizing material used.

In the embodiments described above, a pair of the magnets or plate electrodes are used. However, the magnets and electrodes of two pairs or more may be used in the present invention. Further, the magnets and electrodes may arranged to be moved relative to the substrate.

A polarizer such as a polarizing plate or a polarizing film prepared according to the present invention exhibits high light transmission properties along the transmission axis and high light absorption properties along the absorption axis. Thus, it will be noted that the polarizer can be effectively used for a light filter and a light shutter for various kinds of optical devices; a window glass for a building; a window glass for an automobile, an airplane and the like; a glare shielding filter for a front cover glass of a meter panel. Also, the polarizer is highly useful for a glare shielding and/or contrasting filter for a cathode ray tube such as a television receiver or the like. Furthermore, the polarizer is highly suitable for use for a contrasting filter for a liquid crystal display device. Particularly, since the process of the present invention is directly applicable to a glass plate and provides a polarizer of excellent heat-resistance by using a metal element as the dichromatic material, it can be effectively practiced

-12-

directly with respect to the inner and outer surfaces of a cathode ray tube and the glass surface of a liquid crystal display device to highly improve the quality of these devices.

It will thus be seen that the objects set forth above, among those made apparent from the preceding description, are efficiently attained and since, certain changes may be made in the above construction without departing from the spirit and scope of the invention, it is intended that all matter contained in the above description and shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween.

CLAIMS:

1. A process for making a polarizer such as a polarizing plate or a polarizing film characterised by comprising the step of applying at least one of a magnetic field and an electric field to a coated layer containing a dichromatic material therein which is formed on a substrate to effect molecular orientation or crystalline orientation of said dichromatic material contained in said coated layer in a predetermined direction.

2. A process as claimed in claim 1, characterised in that said substrate is formed of a transparent plastics material.

3. A process as claimed in claim 1, characterised in that said substrate is formed of a transparent glass material.

4. A process as claimed in claim 1, characterised in that said dichromatic material is a crystalline metallic material.

5. A process as claimed in claim 1, characterised in that said dichromatic material is a crystalline non-metallic material.

6. A process as claimed in any one of claims 1 to 5, characterised by applying a magnetic field to a first coated layer containing a dichromatic material therein which is formed on a substrate to carry out the molecular orientation or crystalline orientation of said dichromatic material contained in said coated layer in a predetermined direction;

applying a material essentially consisting of the same dichromatic material as said dichromatic material of said first coated layer onto said first coated layer to form a second coated layer after the orientating and drying of said first coated layer; and

applying to said second coated layer an electric field formed to cross said second coated layer at a predetermined angle to carry out the molecular orientation of crystalline orientation of the dichromatic material of

- 14 -

said second coated layer in the direction different from the orientation direction of said first coated layer.

7. A process as claimed in claim 6, characterised in that said polarizer is a circular polarizer.

8. A process as claimed in any one of claims 1 to 5, a plurality of layers containing dichromatic material are applied to said substrate, each of said layers being oriented by means of an electric or magnetic field and dried.

9. A polarizer characterised in that it is formed by a process as defined in any one of claims 1 to 8.

# FIG. 1

10a

16

S
N

14  16

N
S

10b

12

P

# FIG. 2

| coating step | orientation step |
|---|---|

drying step

2/3

0159850

# FIG. 3

first coating step
first orientation step
first drying step
second coating step
second orientation step
second drying step

# FIG. 4

26a

P

22

18    20

26b

# FIG. 5

# FIG. 6